# FASCICULE DE BREVET EUROPEEN

(11) **EP 3 957 872 B1**
(45) Date de publication et mention de la délivrance du brevet: **29.03.2023**
(21) Numéro de dépôt: 21185433.6
(22) Date de dépôt: 13.07.2021
(51) Int. Cl.: F16C 11/04, F16C 11/12

(54) **ARTICULATION ÉLASTIQUE POUR BRAS OSCILLANT DE SUSPENSION D'UN VÉHICULE AUTOMOBILE**
ELASTISCHES GELENK FÜR EINEN AUFHÄNGUNGSSCHWENKARM EINES KRAFTFAHRZEUGS
ELASTIC JOINT FOR OSCILLATING ARM OF A MOTOR VEHICLE SUSPENSION

(30) Priorité: 21.08.2020 FR 2008604
(43) Date de publication de la demande: 23.02.2022
(73) Titulaire: ContiTech Vibration Control GmbH, 30165 Hannover (DE)
(72) Inventeur: SIGOGNAULT, André-Louis, 35000 RENNES (FR); JEANNEAU, Yann, 35000 RENNES (FR); HERCOUET, Roland, 35000 RENNES (FR)
(74) Mandataire: Hardouin, Briac

(56) Documents cités:
- WO-A2-2019/243649
- DE-A1- 3 233 890
- DE-A1- 3 800 314
- US-A- 4 671 694
- US-B2- 8 783 702

## Description

### Domaine de l'invention

La présente demande de brevet se rapporte à une articulation élastique qui est particulièrement adaptée pour relier un bras oscillant de suspension sur le châssis d'un véhicule automobile, en particulier un bras avant de suspension.

### Etat de la technique

Un véhicule automobile est généralement équipé de plusieurs bras de suspension, ou triangles, qui permettent chacun de relier le châssis du véhicule sur un support de roue.

Plus particulièrement, le bras de suspension s'étend transversalement depuis une première extrémité qui est fixée sur le châssis du véhicule jusqu'à une seconde extrémité qui est fixée sur le support de roue par l'intermédiaire d'une articulation avant et d'une articulation arrière par exemple.

Chaque articulation est montée sur une tige d'articulation qui s'étend axialement depuis le bras de suspension, suivant une orientation longitudinale de déplacement du véhicule.

Une articulation de bras de suspension doit être en mesure d'amortir les vibrations qui la traversent et les bruits parasites.

Dans ce but, on connaît de l'état de la technique une articulation qui comporte une enveloppe externe de forme tubulaire qui s'étend axialement et qui est reliée sur le châssis du véhicule, et une douille interne qui s'étend axialement et qui est adaptée pour coopérer avec une tige d'articulation solidaire du bras de suspension.

La douille interne est montée mobile axialement dans l'enveloppe externe par intermédiaire d'une bague intercalaire, entre une position avant, une position arrière, et une position de repos intermédiaire.

La bague intercalaire est réalisée au moins en partie en matériau élastique du type élastomère pour amortir les efforts et les bruits transmis entre l'enveloppe externe et la douille interne, et pour rappeler élastiquement la douille interne vers sa position intermédiaire de repos.

De plus, l'articulation du bras de suspension peut aussi avoir une fonction de transmission d'effort axial, c'est à dire un effort longitudinal d'avant en arrière suivant l'axe de la douille de l'articulation, notamment en cas de choc ou de freinage violent du véhicule par exemple. Ce type d'effort axial est transmis depuis la tige du bras d'amortisseur, jusqu'à l'enveloppe externe de l'articulation qui est reliée sur le châssis du véhicule, par l'intermédiaire de la douille interne.

A cet effet, il est connu de rapporter au moins une rondelle sur la douille interne, la rondelle étant prévue pour prendre appui sur une extrémité axiale de l'enveloppe externe pour limiter la course de la douille interne permis par la bague intercalaire élastique. Une articulation selon le genre est connue par le document DE 38 00 314 A1.

### Problème technique restant posé

Un problème constant constaté avec une articulation de bras de suspension équipée d'une rondelle formant butée axiale est le bruit potentiellement généré par le contact entre la rondelle et l'élément sur lequel elle prend appui axialement.

De plus, une telle rondelle formant butée axiale est un élément rapporté qui demande une étape de mise en place lors du montage de l'articulation sur le bras de suspension. Une telle étape demande du temps et présente un risque de perte de la rondelle au cours du montage de l'articulation.

### Exposé de l'invention

La présente invention a notamment pour but de résoudre ces inconvénients.

On atteint cet objectif, ainsi que d'autres apparaîtront à la lecture de la description qui suit, avec une articulation élastique pour bras de suspension d'un véhicule automobile, ladite articulation comprenant au moins :
- une enveloppe externe,
- une douille interne qui s'étend axialement suivant un axe d'articulation et qui est adaptée pour coopérer avec une tige d'articulation axiale solidaire du bras de suspension, la douille interne étant montée mobile axialement dans l'enveloppe externe suivant l'axe d'articulation, entre une position avant, une position arrière, et une position intermédiaire de repos,
- une bague intercalaire qui est interposée radialement entre la douille interne et l'enveloppe externe, et qui est adaptée pour rappeler élastiquement la douille interne vers sa position intermédiaire de repos, caractérisée en ce que l'enveloppe externe comprend une première réduction de diamètre formant une première butée avant et une seconde réduction de diamètre formant une seconde butée arrière opposée, et en ce que la douille interne comprend une collerette radiale qui présente une première face d'appui qui est adaptée pour coopérer avec ladite première butée avant et une seconde face d'appui qui est adaptée pour coopérer avec ladite seconde butée arrière, de façon à limiter la course de la douille interne,
- un élément filtrant tubulaire qui est solidaire de la douille interne et qui est réalisé en matériau déformable élastiquement pour permettre le rappel élastique de la douille interne vers sa position intermédiaire de repos, et
- une cage qui entoure l'élément filtrant et qui est interposée axialement suivant l'axe d'articulation entre la seconde face d'appui de la collerette de la douille interne et la seconde butée arrière de l'enveloppe externe, l'élément filtrant de la bague intercalaire recouvre la première face d'appui et la seconde face d'appui.

Cette caractéristique permet à l'enveloppe externe de l'articulation de reprendre directement les efforts axiaux transmis par la douille interne, sans ajout de pièce supplémentaire comme une rondelle rapportée sur la douille interne.

De plus, l'articulation selon l'invention présente une forme compacte, la transmission des efforts entre les différents éléments étant réalisées à l'intérieur de l'articulation.

Suivant d'autres caractéristiques optionnelles de l'invention, prises seules ou en combinaison :
- l'élément filtrant de la bague intercalaire recouvre la première face d'appui et la seconde face d'appui de la collerette de la douille interne pour limiter la transmission de bruits et de vibrations parasites. L'élément filtrant permet également de maîtriser les débattements entre la douille interne et l'enveloppe externe, et d'améliorer la tenue aux efforts ;
- l'élément filtrant de la bague intercalaire est surmoulé sur la douille interne ;
- la cage de la bague intercalaire comprend un premier mors et un second mors qui forment une pince, la cage étant adaptée pour occuper une position de repos dans laquelle l'élément filtrant élastique de la bague intercalaire est libre, et une position de verrouillage dans laquelle l'élément filtrant élastique de la bague intercalaire est pincé radialement entre les deux mors de la cage par une compression radiale exercée sur la bague intercalaire par l'enveloppe externe ;
- l'enveloppe externe est réalisée par emboutissage d'une tôle. Avantageusement, l'enveloppe externe ne nécessite pas d'usinage après sa fabrication ;
- l'enveloppe externe de l'articulation comporte une première patte de fixation et une seconde patte de fixation formant pince qui sont adaptées pour pincer entre elles un bord du châssis d'un véhicule automobile, pour assurer la fixation de l'articulation ;
- l'articulation comporte un capot amovible qui présente successivement une portion de fixation plane en appui sur la première patte de fixation, une portion de blocage courbe qui bloque en position la bague intercalaire et une portion d'encrage qui est logée dans une lumière ménagée dans l'enveloppe externe ;
- le capot est réalisé par emboutissage d'une tôle.

L'invention se rapporte également à un bras de suspension d'un véhicule automobile équipé d'au moins une articulation du type décrite ci-dessus.

### Brève description des dessins

D'autres caractéristiques et avantages de l'invention ressortiront à la lecture de la description qui suit, en référence aux figures annexées, qui illustrent :
[Fig. 1] : une vue d'ensemble en perspective d'un bras de suspension équipé d'une articulation avant selon un premier mode de réalisation de l'invention, et d'une articulation arrière ;
[Fig. 2] : une vue éclatée en perspective de l'articulation représentée à la figure 1 ;
[Fig. 3] : une vue en section longitudinale suivant l'axe A central de l'articulation, de l'articulation de la figure 1 dans sa position intermédiaire de repos ;
[Fig. 4] : une vue en section longitudinale suivant l'axe A central de l'articulation, de l'articulation de la figure 1 dans sa position avant ;
[Fig. 5] : une vue en section longitudinale suivant l'axe A central de l'articulation, de l'articulation de la figure 1 dans sa position arrière ;
[Fig. 6] : une vue en section transversale suivant l'axe 6-6 de la figure 3, de la pince formée par la seconde partie de la bague intercalaire dans une position de repos ;
[Fig. 7] : une vue en section transversale suivant l'axe 6-6 de la figure 3, de la pince formée par la seconde partie de la bague intercalaire dans une position de verrouillage ;
[Fig. 8] : une vue en perspective avec arrachement d'un deuxième mode de réalisation de l'articulation selon l'invention ;
[Fig. 9] : une vue en perspective d'un troisième mode de réalisation de l'articulation selon l'invention comprenant un capot amovible dans une position de blocage ;
[Fig. 10] : une vue en perspective de l'articulation représentée à la figure 9 avec le capot dans une position escamotée ;
[Fig. 11] : une vue en section transversale de l'articulation représentée à la figure 9 avec le capot dans sa position de blocage.

Dans la description et les revendications, on utilisera à titre non limitatif les expressions « avant », « arrière » et « axial » en référence à l'axe A longitudinal représenté sur mes figures et en référence à la direction d'avancement longitudinale d'un véhicule.

De plus, pour clarifier la description et les revendications, on adoptera à titre non limitatif la terminologie longitudinal, vertical et transversal en référence au trièdre L, V, T indiqué aux figures.

Aussi, les éléments identiques ou similaires sont repérés par des signes de référence identiques ou similaires sur l'ensemble des figures.

### Description détaillée

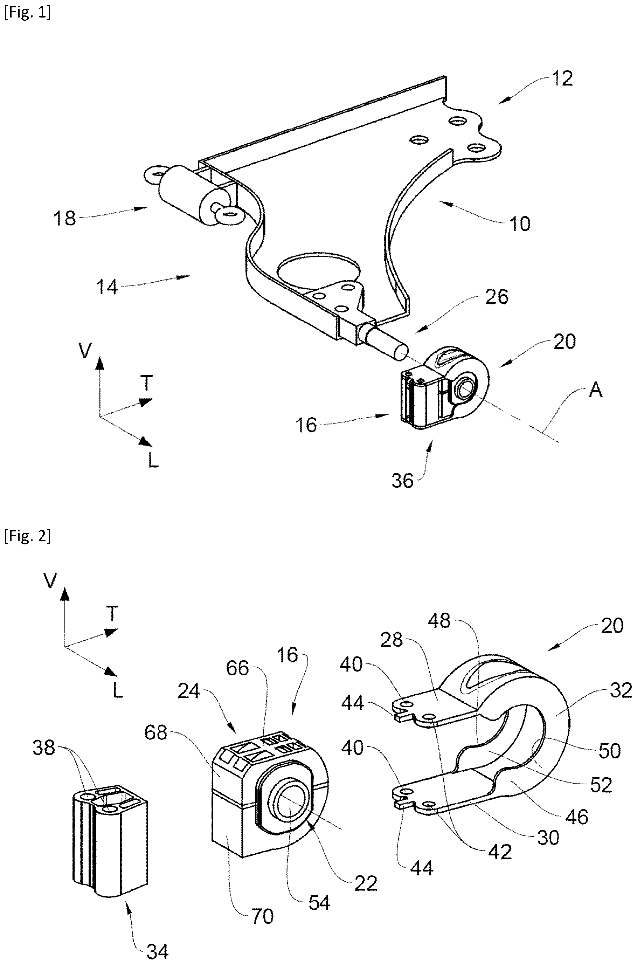

On a représenté aux figures 1 à 7 un bras de suspension 10 avant d'un véhicule automobile selon un premier mode de réalisation de l'invention.

Le bras de suspension 10 s'étend transversalement, c'est à dire suivant une direction perpendiculaire à la direction d'avancement longitudinale du véhicule 10, depuis une première extrémité 12 qui est conçue pour être fixée sur le châssis (non représenté) du véhicule jusqu'à une seconde extrémité 14 qui est conçue pour être fixée sur un support de roue (non représenté), par l'intermédiaire d'une première articulation 16 élastique avant selon l'invention et d'une seconde articulation 18 élastique arrière.

Comme on peut le voir à la figure 2, l'articulation 16 avant comporte une enveloppe externe 20 de forme tubulaire, une douille interne 22 et une bague intercalaire 24 qui est interposée radialement entre la douille interne 22 et l'enveloppe externe 20.

La douille interne 22 est montée oscillante autour d'une tige d'articulation 26 qui est solidaire du bras de suspension 10, autour d'un axe A longitudinal d'articulation.

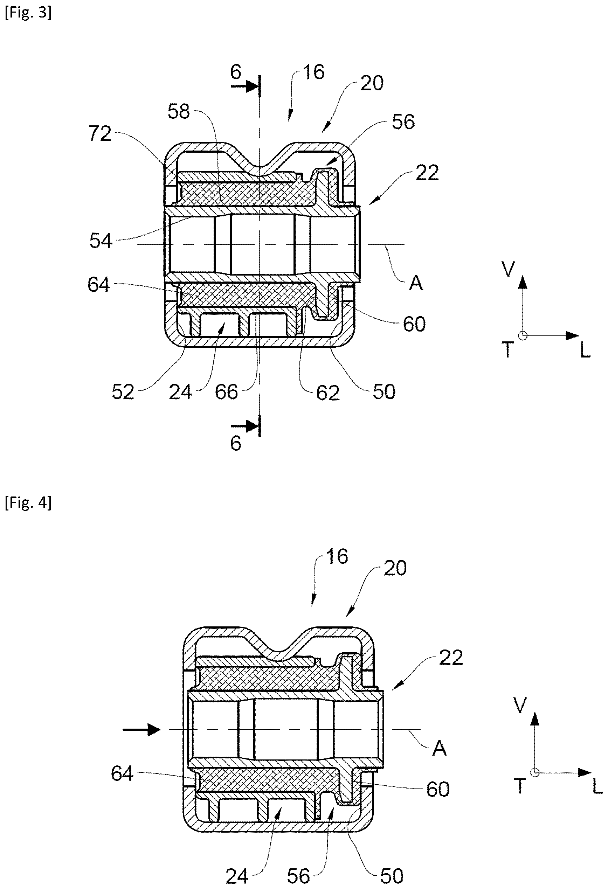

L'enveloppe externe 20 est une tôle emboutie de forme en U qui présente une première patte de fixation 28 transversale et une seconde patte de fixation 30 transversale qui sont reliées chacune sur une portion tubulaire 32. Avantageusement, l'enveloppe externe 20 présente une symétrie de conception suivant un plan 6-6 visible à la figure 3, de sorte que l'enveloppe externe 20 peut équiper aussi bien une articulation pour un bras de suspension gauche que pour un bras de suspension droit.

Une entretoise 34 est interposée verticalement entre la première patte de fixation 28 et la seconde patte de fixation 30 de l'enveloppe externe 20. L'ensemble formé par l'entretoise 34, la première patte de fixation 28 et la seconde patte de fixation 30 constituant une fixation 36 prévue pour fixer l'articulation 16 sur un support de roue du véhicule (non représenté).

A cet effet, l'entretoise 34 délimite deux logements tubulaires 38 verticaux qui débouchent chacun dans une premier trou 40 et un second trou 42 ménagés respectivement dans la première patte de fixation 28 et la seconde patte de fixation 30, pour le passage d'un élément de fixation (non représenté), comme une tige filetée par exemple.

L'entretoise 34 est réalisée de préférence en aluminium extrudé, les deux logements tubulaires 38 étant réalisés au cours de l'extrusion de l'entretoise 34.

En référence aux figures 1 et 2, on notera que la première patte de fixation 28 et la seconde patte de fixation 30 sont prolongées chacune par un ergot 44 qui est plié lors du montage de l'articulation 16 vers l'entretoise 34, de façon à emprisonner l'entretoise 34 entre les deux pattes de fixation 28, 30.

De plus, la portion tubulaire 32 de l'enveloppe externe 20 présente une première réduction de diamètre 46 formée par un bord tombé à une première extrémité libre avant, et une seconde réduction de diamètre 48 formée par un bord tombé à une seconde extrémité libre arrière. La face interne de la première réduction de diamètre 46 et la face interne de la seconde réduction de diamètre 48 forment une première butée avant 50 axiale et une seconde butée arrière 52 axiale respectivement.

En référence à la figure 3, la douille interne 22 délimite un logement tubulaire 54 qui s'étend axialement suivant l'axe A d'articulation et qui est adapté pour être monté en force sur la tige d'articulation 26 du bras de suspension 10, pour fixer la douille interne 22 sur la tige d'articulation 26.

De plus, la douille interne 22 forme une collerette 56 qui s'étend radialement depuis une face externe 58 de la douille interne 22 et qui présente une première face d'appui 60 qui est adaptée pour coopérer axialement avec la première butée avant 50 et une seconde face d'appui 62 qui est adaptée pour coopérer axialement avec la seconde butée arrière 52.

La douille interne 22 est reliée de façon élastique sur l'enveloppe externe 20 par l'intermédiaire de la bague intercalaire 24.

A cet effet, la bague intercalaire 24 comporte un élément filtrant 64 tubulaire qui est surmoulé sur la face externe 58 et sur la collerette 56 de la douille interne 22 et qui est réalisé en matériau déformable élastiquement, par exemple en élastomère. L'élément filtrant 64 est conçu notamment pour filtrer les bruits et les vibrations en les absorbant.

De plus, la bague intercalaire 24 comporte une cage 66 annulaire qui entoure l'élément filtrant 64 élastique et qui est interposée axialement entre la seconde face d'appui 62 de la collerette 56 et la seconde butée arrière 52 formée par l'enveloppe externe 20. La cage 66 de la bague intercalaire 24 est réalisée en matériau rigide par moulage en thermoplastique pour être capable de transmettre un effort axial entre la collerette 56 et la seconde butée arrière 52, comme décrit plus en détail par la suite.

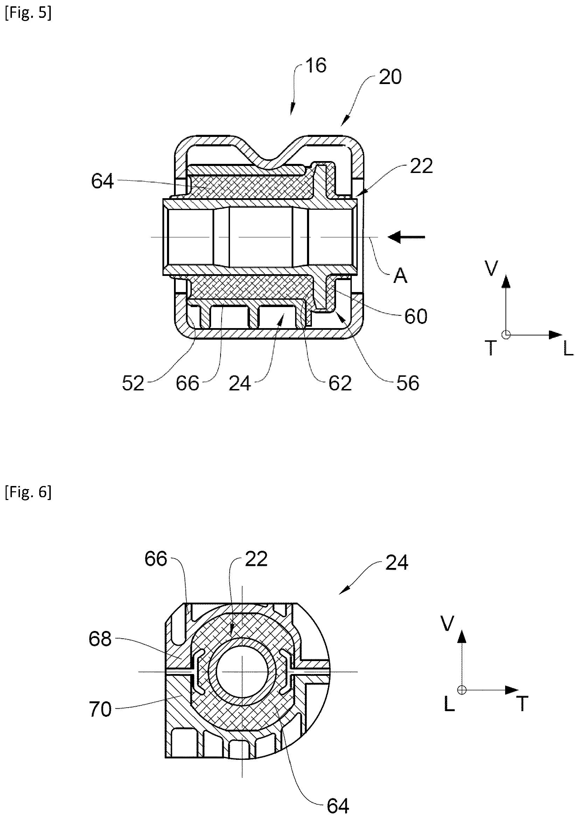

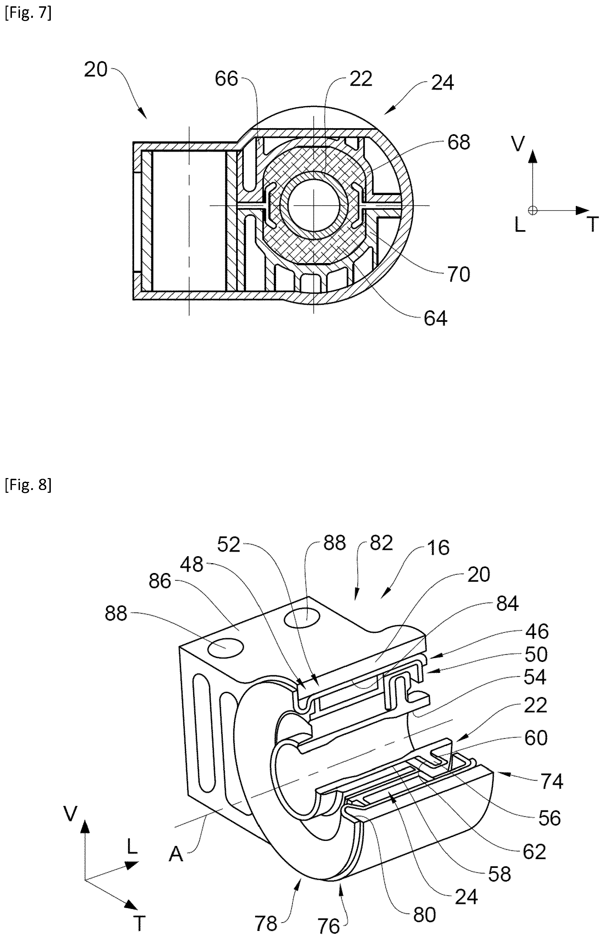

Aussi, comme on peut le voir à la figure 6, la cage 66 rigide de la bague intercalaire 24 comprend un premier mors 68 et un second mors 70 qui forment une pince, la cage 66 étant adaptée pour occuper une position de repos représentée à la figure 6, dans laquelle l'élément filtrant 64 élastique de la bague intercalaire 24 est libre, et une position de verrouillage représentée à la figure 7, dans laquelle l'élément filtrant 64 élastique de la bague intercalaire 24 est pincé radialement entre les deux mors 68, 70 de la cage 66, lorsque la bague intercalaire 24 est logée et comprimée dans l'enveloppe externe 20. Cette caractéristique permet de contraindre et de comprimer sensiblement l'élément filtrant 64 élastique de la bague intercalaire 24, ce qui améliore la capacité d'élongation de l'élément filtrant 64 élastique et qui favorise la pérennité des caractéristiques mécaniques et élastiques de l'élément filtrant 64 élastique.

En référence aux figures 2 et 3, on notera que la bague intercalaire 24 est montée en force dans l'enveloppe externe 20 de sorte que l'ensemble formé par la bague intercalaire 24 et la douille interne 22 est solidaire de l'enveloppe externe 20.

En outre, selon la figure 3, la cage 66 rigide de la bague intercalaire 24 présente une extrémité libre arrière 72 qui est en appui axial contre la seconde butée arrière 52 formée par le bord tombé de l'enveloppe externe 20.

L'articulation 16 selon l'invention autorise un certain débattement axial, suivant l'axe A longitudinal, de la douille interne 22 par rapport à l'enveloppe externe 20, tout en étant apte à encaisser des efforts axiaux transmis par le châssis du véhicule via le bras de suspension 10.

Plus particulièrement, la douille interne 22 est montée mobile axialement dans l'enveloppe externe 20 suivant l'axe A longitudinal d'articulation grâce à la capacité de déformation élastique de l'élément filtrant 64 de la bague intercalaire 24, entre une position avant illustrée à la figure 4, une position arrière illustrée à la figure 5, et une position intermédiaire de repos illustrée à la figure 3 vers laquelle la douille 22 est rappelée élastiquement.

Dans la position avant de la douille interne 22, la première face d'appui 60 de la collerette 56 est en appui axial contre la première butée 50 formée par l'enveloppe externe 20, position dans laquelle une portion élastique de la bague intercalaire 24 est interposée axialement entre la collerette 56 et la première butée 50 pour faire amortisseur et filtrer les bruits.

Dans la position arrière de la douille interne 22, la seconde face d'appui 62 de la collerette 56 est en appui axial contre la seconde butée 52 formée par l'enveloppe externe 20, par l'intermédiaire de la cage 66 rigide de la bague intercalaire 24. De plus, dans cette position arrière, une portion élastique de la bague intercalaire 24 est interposée axialement entre la collerette 56 et la seconde butée 50 pour faire amortisseur et filtrer les bruits, ainsi que pour la maîtrise des débattements et la tenue aux efforts.

A la lecture de la description, on comprend que l'articulation 16 offre l'avantage d'être réalisée avec un nombre limité d'éléments, lesquels nécessitent peu ou pas d'usinage de précision, ce qui permet de réduire le coût et le temps de production d'une telle articulation.

De plus, l'articulation 16 selon l'invention est apte à encaisser et transmettre lest efforts, notamment les efforts axiaux, transmis entre le châssis du véhicule et la roue associée.

Selon un autre aspect, on a représenté à la figure 8 une articulation 16 selon un deuxième mode de réalisation de l'invention, qui diffère du premier mode de réalisation de l'articulation 16 décrite ci-dessus en ce que l'enveloppe externe 20 et la fixation 36 prévue pour fixer l'articulation sur un support de roue du véhicule sont réalisées en deux éléments distincts.

Plus particulièrement, l'enveloppe externe 20 présente une forme tubulaire qui s'étend suivant l'axe A longitudinal et qui est réalisée par emboutissage. L'enveloppe externe 20 comprend une première réduction de diamètre 46 formée par un bord tombé à une première extrémité libre avant 74, et une seconde réduction de diamètre 48 formée par un retreint à une seconde extrémité libre arrière 76.

La face interne de la première réduction de diamètre 46 et la face interne de la seconde réduction de diamètre 48 forment une première butée avant 50 axiale et une seconde butée arrière 52 axiale respectivement.

De plus, toujours selon le deuxième mode de réalisation de l'articulation, la seconde extrémité libre arrière de l'enveloppe externe 20 est rabattue radialement de façon à former une collerette 78 annulaire qui est délimitée par une face d'appui 80 qui est en appui axial sur l'extrémité libre arrière 76 de l'enveloppe externe 20.

Aussi, la fixation 36 comporte un corps 82 qui délimite un logement tubulaire 84 dans lequel l'enveloppe externe 20 est monté en force. Le corps 82 comporte également un support 86 qui est traversé par deux trous 88 qui s'étendent chacun perpendiculairement à l'axe A d'articulation et qui sont prévus chacun pour le passage d'un élément de fixation telle une tige filetée, pour fixer l'articulation 16.

La fixation 36 est réalisée de préférence en aluminium extrudé.

Toujours selon le deuxième mode de réalisation de l'articulation 16 représentée à la figure 8, la douille interne 22 forme une collerette 56 qui s'étend radialement depuis une face externe 58 de la douille interne 22 et qui présente une première face d'appui 60 qui est adaptée pour coopérer axialement avec la première butée avant 50 et une seconde face d'appui 62 qui est adaptée pour coopérer axialement avec la seconde butée arrière 52.

La douille interne 22 est reliée de façon élastique sur l'enveloppe externe 20 par l'intermédiaire de la bague intercalaire 24.

La coopération entre la douille interne 22, la bague intercalaire 24 et la butée avant 50 et la seconde butée arrière 52 est similaire à la coopération décrite ci-dessus et ne sera donc pas décrite plus en détails pour ne pas alourdir inutilement la description. On constate simplement que les efforts axiaux sont transmis entre l'enveloppe externe 20 et la fixation 36 par l'intermédiaire de la collerette 78 et par friction entre l'enveloppe externe 20 et la fixation 36.

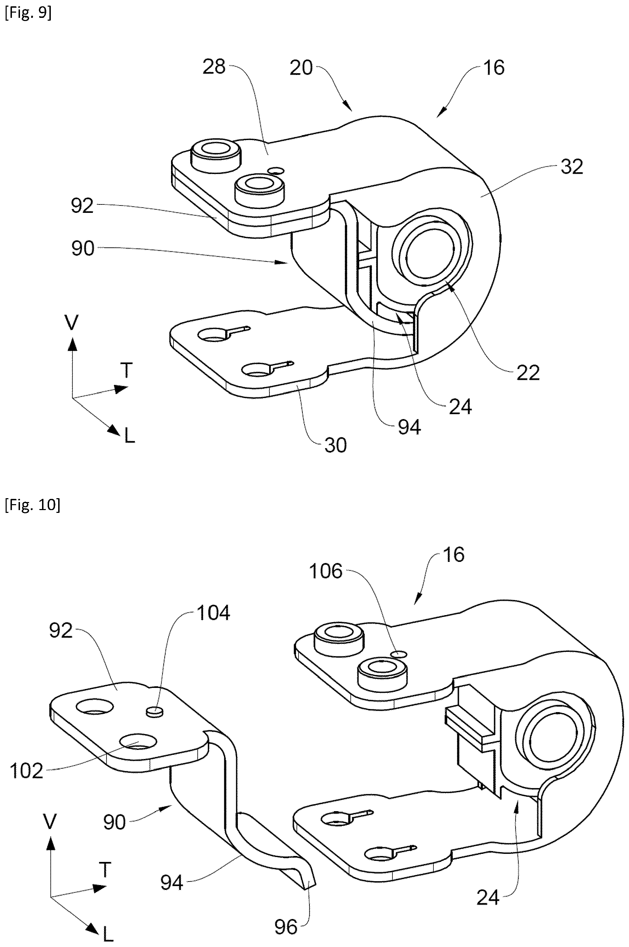

On a représenté aux figures 9 à 11 un troisième mode de réalisation préféré de l'invention, qui diffère du premier mode de réalisation en ce que l'articulation 16 ne comporte pas d'entretoise 34, la fixation de l'articulation 16 selon ce troisième mode de réalisation étant réalisée par pincement sur le châssis du véhicule.

A cet effet, comme on peut le voir à la figure 9, l'enveloppe externe 20 est une tôle emboutie de forme en U qui présente une première patte de fixation 28 transversale et une seconde patte de fixation 30 transversale qui sont reliées chacune sur une portion tubulaire 32.

En complément, l'articulation 16 comporte un capot 90 amovible en tôle pliée qui présente successivement une portion de fixation 92 plane en appui sur la première patte de fixation 28, une portion de blocage 94 courbe qui épouse la forme de la bague intercalaire 24 et une portion d'encrage 96 formant extrémité libre du capot 90.

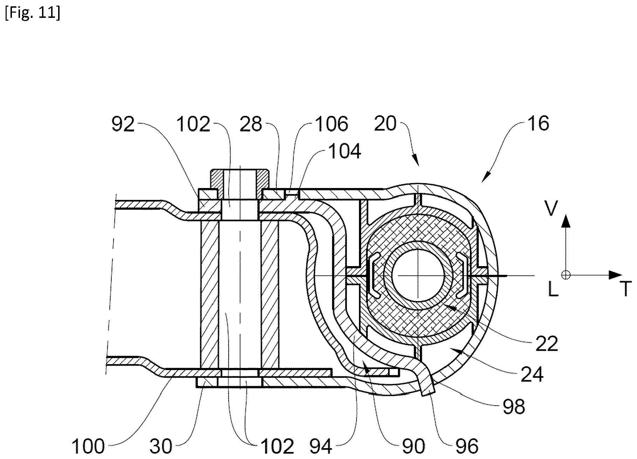

Le capot 90 est un élément amovible qui est adapté pour occuper une position de blocage illustrée aux figures 9 et 11 et une position escamotée, illustrée à la figure 10, dans laquelle l'ensemble formé par l'enveloppe externe 20, la douille interne 22 et la bague intercalaire 24 sont aptes à être insérés dans l'enveloppe externe 20.

Dans la position de blocage du capot 90, la portion de blocage 94 est en appui sur la bague intercalaire 24 pour bloquer en position l'ensemble formé par la douille interne 22 et la bague intercalaire 24 dans l'enveloppe externe 20.

A cet effet, comme on peut le voir à la figure 11, la portion d'ancrage 96 du capot 90 est logée dans une lumière 98 longitudinale de forme complémentaire qui est ménagée dans l'enveloppe externe 20, et la portion de fixation 92 du capot 90 est plaquée contre la première patte de fixation 28.

Toujours selon la figure 11, l'articulation 16 occupe une position fixée sur un bord 100 de le châssis du véhicule, position dans laquelle le bord 100 est pincé verticalement entre d'une part la seconde patte de fixation 30 de l'enveloppe externe 20 et d'autre part la première patte de fixation 28 de l'enveloppe externe 20 et la portion de fixation 92 du capot 90.

De plus, la seconde patte de fixation 30, la première patte de fixation 28 de l'enveloppe externe 20 et la portion de fixation 92 du capot 90 délimitent chacune deux trous 102 verticaux chacun qui sont prévu pour le passage d'un moyen de fixation, comme un boulon par exemple.

Enfin, on notera que le capot 90 est équipé d'un pion de centrage 104 qui est adapté pour coopérer avec un logement 106 complémentaire délimité par la première patte de fixation 28 de l'enveloppe externe 20, pour favoriser le mise en position de l'articulation 16 sur le châssis du véhicule.

## Revendications

1. Articulation (16) élastique pour bras de suspension (10) d'un véhicule automobile, ladite articulation (16) comprenant au moins :
- une enveloppe externe (20),
- une douille interne (22) qui s'étend axialement suivant un axe (A) d'articulation et qui est adaptée pour coopérer avec une tige d'articulation (26) axiale solidaire du bras de suspension (10), la douille interne (22) étant montée mobile axialement dans l'enveloppe externe (20) suivant l'axe (A) d'articulation, entre une position avant, une position arrière, et une position intermédiaire de repos, et
- une bague intercalaire (24) qui est interposée radialement entre la douille interne (22) et l'enveloppe externe (20), et qui est adaptée pour rappeler élastiquement la douille interne (22) vers sa position intermédiaire de repos,
l'enveloppe externe (20) comprenant une première réduction de diamètre (46) formant une première butée avant (50) et une seconde réduction de diamètre (48) formant une seconde butée arrière (52) opposée, la douille interne (22) comprenant une collerette (56) radiale qui présente une première face d'appui (60) qui est adaptée pour coopérer avec ladite première butée avant (50) et une seconde face d'appui (62) qui est adaptée pour coopérer avec ladite seconde butée arrière (52), de façon à limiter la course de la douille interne (20),
**caractérisé en ce que** la bague intercalaire (24) comprend :
- un élément filtrant (64) tubulaire qui est solidaire de la douille interne (22) et qui est réalisé en matériau déformable élastiquement pour permettre le rappel élastique de la douille interne (22) vers sa position intermédiaire de repos, et
- une cage (66) qui entoure l'élément filtrant (64) et qui est interposée axialement suivant l'axe (A) d'articulation entre la seconde face d'appui (62) de la collerette (56) de la douille interne (22) et la seconde butée arrière (52) de l'enveloppe externe (20).

2. Articulation (16) élastique selon la revendication 1, **caractérisée en ce que** l'élément filtrant (64) de la bague intercalaire (24) recouvre la première face d'appui (60) et la seconde face d'appui (62) de la collerette (56) de la douille interne (22) pour limiter la transmission de bruits et de vibrations parasites.

3. Articulation (16) élastique selon l'une quelconque des revendications précédentes, **caractérisée en ce que** l'élément filtrant (64) de la bague intercalaire (24) est surmoulé sur la douille interne (22).

4. Articulation (16) élastique selon l'une quelconque des revendications précédentes, **caractérisée en ce que** la cage (66) de la bague intercalaire (24) comprend un premier mors (68) et un second mors (70) qui forment une pince, la cage (66) étant adaptée pour occuper une position de repos dans laquelle l'élément filtrant (64) élastique de la bague intercalaire (24) est libre, et une position de verrouillage dans laquelle l'élément filtrant (64) élastique de la bague intercalaire (24) est pincé radialement entre les deux mors (68, 70) de la cage (66) par une compression radiale exercée sur la bague intercalaire (24) par l'enveloppe externe (20).

5. Articulation (16) élastique selon l'une quelconque des revendications précédentes, **caractérisée en ce que** l'enveloppe externe (20) est réalisée par emboutissage d'une tôle.

6. Articulation (16) élastique selon l'une quelconque des revendications précédentes, **caractérisée en ce que** l'enveloppe externe (20) de l'articulation (16) comporte une première patte de fixation (28) et une seconde patte de fixation (30) formant pince qui sont adaptées pour pincer entre elles un bord (100) du châssis d'un véhicule automobile, pour assurer la fixation de l'articulation (16).

7. Articulation (16) élastique selon la revendication 6, **caractérisée en ce qu'**elle comporte un capot (90) amovible qui présente successivement une portion de fixation (92) plane en appui sur la première patte de fixation (28), une portion de blocage (94) courbe qui bloque en position la bague intercalaire (24) et une portion d'encrage (96) qui est logée dans une lumière (98) ménagée dans l'enveloppe externe (20).

8. Articulation (16) élastique selon l'une quelconque des revendications 6 et 7, **caractérisée en ce que** le capot (90) est réalisé par emboutissage d'une tôle.

9. Bras de suspension (10) d'un véhicule automobile équipé d'au moins une articulation (16) selon l'une quelconque des revendications précédentes.

## Patentansprüche

1. Elastisches Gelenk (16) für einen Aufhängungsarm (10) eines Kraftfahrzeugs, wobei das Gelenk (16) mindestens umfasst:
- eine äußere Hülle (20),
- eine innere Hülse (22), welche sich axial entlang einer Gelenkachse (A) erstreckt und welche dazu eingerichtet ist, mit einer axialen Gelenkstange (26) zusammenzuwirken, die mit dem Aufhängungsarm (10) fest verbunden ist, wobei die innere Hülse (22) in der äußeren Hülle (20) axial beweglich entlang der Gelenkachse (A) zwischen einer vorderen Position, einer hinteren Position und einer dazwischenliegenden Ruheposition angebracht ist, und
- einen Zwischenring (24), welcher radial zwischen der inneren Hülse (22) und der äußeren Hülle (20) angeordnet ist und welcher dazu eingerichtet ist, die innere Hülse (22) elastisch in ihre dazwischenliegende Ruheposition zurückzustellen,
wobei die äußere Hülle (20) eine erste Durchmesserverkleinerung (46), die einen vorderen ersten Anschlag (50) bildet, und eine zweite Durchmesserverkleinerung (48), die einen gegenüberliegenden hinteren zweiten Anschlag (52) bildet, umfasst, wobei die innere Hülse (22) einen radialen Kragen (56) umfasst, welcher eine erste Anlagefläche (60), die dazu eingerichtet ist, mit dem vorderen ersten Anschlag (50) zusammenzuwirken, und eine zweite Anlagefläche (62), die dazu eingerichtet ist, mit dem hinteren zweiten Anschlag (52) zusammenzuwirken, aufweist, um den Weg der inneren Hülse (20) zu begrenzen, **dadurch gekennzeichnet, dass** der Zwischenring (24) umfasst:
- ein rohrförmiges Filterelement (64), das mit der inneren Hülse (22) fest verbunden ist und das aus einem elastisch verformbaren Material hergestellt ist, um die elastische Rückstellung der inneren Hülse (22) in ihre dazwischenliegende Ruheposition zu ermöglichen, und
- einen Käfig (66), der das Filterelement (64) umgibt und der axial entlang der Gelenkachse (A) zwischen der zweiten Anlagefläche (62) des Kragens (56) der inneren Hülse (22) und dem hinteren zweiten Anschlag (52) der äußeren Hülle (20) angeordnet ist.

2. Elastisches Gelenk (16) nach Anspruch 1, **dadurch gekennzeichnet, dass** das Filterelement (64) des Zwischenringes (24) die erste Anlagefläche (60) und die zweite Anlagefläche (62) des Kragens (56) der inneren Hülse (22) bedeckt, um die Übertragung von Störgeräuschen und von parasitären Schwingungen zu begrenzen.

3. Elastisches Gelenk (16) nach einem der vorhergehenden Ansprüche, **dadurch gekennzeichnet, dass** das Filterelement (64) des Zwischenringes (24) auf die innere Hülse (22) aufgeformt ist.

4. Elastisches Gelenk (16) nach einem der vorhergehenden Ansprüche, **dadurch gekennzeichnet, dass** der Käfig (66) des Zwischenringes (24) eine erste Spannbacke (68) und eine zweite Spannbacke (70) umfasst, welche eine Zange bilden, wobei der Käfig (66) dazu eingerichtet ist, eine Ruheposition, in welcher das elastische Filterelement (64) des Zwischenringes (24) frei ist, und eine Verriegelungsposition, in welcher das elastische Filterelement (64) des Zwischenringes (24) durch einen radialen Druck, der von der äußeren Hülle (20) auf den Zwischenring (24) ausgeübt wird, radial zwischen den zwei Spannbacken (68, 70) des Käfigs (66) festgeklemmt wird, einzunehmen.

5. Elastisches Gelenk (16) nach einem der vorhergehenden Ansprüche, **dadurch gekennzeichnet, dass** die äußere Hülle (20) durch Tiefziehen eines Bleches hergestellt ist.

6. Elastisches Gelenk (16) nach einem der vorhergehenden Ansprüche, **dadurch gekennzeichnet, dass** die äußere Hülle (20) des Gelenks (16) eine erste Befestigungslasche (28) und eine zweite Befestigungslasche (30), die eine Zange bilden, aufweist, welche dazu eingerichtet sind, zwischen sich einen Rand (100) des Fahrgestells eines Kraftfahrzeugs festzuklemmen, um die Befestigung des Gelenks (16) sicherzustellen.

7. Elastisches Gelenk (16) nach Anspruch 6, **dadurch gekennzeichnet, dass** es eine lösbare Abdeckkappe (90) umfasst, welche nacheinander einen ebenen Befestigungsabschnitt (92), der an der ersten Befestigungslasche (28) anliegt, einen gekrümmten Blockierabschnitt (94), der den Zwischenring (24) in seiner Position blockiert, und einen Verankerungsabschnitt (96), der in einem in der äußeren Hülle (20) ausgebildeten Schlitz (98) aufgenommen ist, aufweist.

8. Elastisches Gelenk (16) nach einem der Ansprüche 6 und 7, **dadurch gekennzeichnet, dass** die Abdeckkappe (90) durch Tiefziehen eines Bleches hergestellt ist.

9. Aufhängungsarm (10) eines Kraftfahrzeugs, der mit mindestens einem Gelenk (16) nach einem der vorhergehenden Ansprüche ausgestattet ist.

## Claims

1. Elastic joint (16) for a suspension arm (10) of a motor vehicle, said joint (16) comprising at least:
- an external casing (20),
- an internal bushing (22) which extends axially along an articulation axis (A) and which is adapted to cooperate with an axial articulation rod (26) secured to the suspension arm (10), the internal bushing (22) being mounted such that it can move axially in the external casing (20) along the articulation axis (A) between a front position, a rear position, and an intermediate rest position, and
- an insert ring (24) which is interposed radially between the internal bushing (22) and the external casing (20), and which is adapted to elastically return the internal bushing (22) to its intermediate rest position,
the external casing (20) comprising a first reduction in diameter (46) forming a first front stop (50) and a second reduction in diameter (48) forming an opposite second rear stop (52), the internal bushing (22) comprising a radial flange (56) which has a first bearing face (60) which is adapted to cooperate with said first front stop (50) and a second bearing face (62) which is adapted to cooperate with said second rear stop (52) so as to limit the travel of the internal bushing (20),
**characterized in that** the insert ring (24) comprises:
- a tubular filtering element (64) which is secured to the internal bushing (22) and which is made of elastically deformable material to allow the elastic return of the internal bushing (22) to its intermediate rest position, and
- a cage (66) which surrounds the filtering element (64) and which is interposed axially along the articulation axis (A) between the second bearing face (62) of the flange (56) of the internal bushing (22) and the second rear stop (52) of the external casing (20).

2. Elastic joint (16) according to Claim 1, **characterized in that** the filtering element (64) of the insert ring (24) covers the first bearing face (60) and the second bearing face (62) of the flange (56) of the internal bushing (22) to limit the transmission of unwanted noise and vibration.

3. Elastic joint (16) according to either one of the preceding claims, **characterized in that** the filtering element (64) of the insert ring (24) is overmoulded onto the internal bushing (22).

4. Elastic joint (16) according to any one of the preceding claims, **characterized in that** the cage (66) of the insert ring (24) comprises a first jaw (68) and a second jaw (70) which form a clamp, the cage (66) being adapted to occupy a rest position in which the elastic filtering element (64) of the insert ring (24) is free, and a locking position in which the elastic filtering element (64) of the insert ring (24) is clamped radially between the two jaws (68, 70) of the cage (66) by a radial compression exerted on the insert ring (24) by the external casing (20).

5. Elastic joint (16) according to any one of the preceding claims, **characterized in that** the external casing (20) is produced by stamping a metal sheet.

6. Elastic joint (16) according to any one of the preceding claims, **characterized in that** the external casing (20) of the joint (16) comprises a first fastening tab (28) and a second fastening tab (30) forming a clamp, which are adapted to clamp an edge (100) of the chassis of a motor vehicle between them in order to fasten the joint (16).

7. Elastic joint (16) according to Claim 6, **characterized in that** it comprises a removable cover (90) which successively has a planar fastening portion (92) bearing on the first fastening tab (28), a curved locking portion (94) which locks the insert ring (24) in position, and an anchoring portion (96) which is housed in an aperture (98) formed in the external casing (20).

8. Elastic joint (16) according to either one of Claims 6 and 7, **characterized in that** the cover (90) is produced by stamping a metal sheet.

9. Motor vehicle suspension arm (10) equipped with at least one joint (16) according to any one of the preceding claims.
